# EUROPÄISCHE PATENTSCHRIFT

(11) **EP 3 391 512 B1**
(45) Veröffentlichungstag und Bekanntmachung des Hinweises auf die Patenterteilung: **08.05.2024**
(21) Anmeldenummer: 16822637.1
(22) Anmeldetag: 15.12.2016
(51) Int. Cl.: H02K 3/34, H02K 15/10, H02K 15/06

(54) **VERFAHREN ZUM EINBRINGEN VON ISOLIERFOLIE UND MINDESTENS EINEM ELEKTRISCHEN LEITER**
METHOD FOR INTRODUCING INSULATING FILM AND AT LEAST ONE ELECTRICAL CONDUCTOR
PROCÉDÉ D'INSERTION D'UN FILM ISOLANT ET AU MOINS UN CONDUCTEUR ÉLECTRIQUE

(30) Priorität: 15.12.2015 DE 102015121883; 22.06.2016 DE 102016111481
(43) Veröffentlichungstag der Anmeldung: 24.10.2018
(73) Patentinhaber: Grob-Werke GmbH & Co. KG, 87719 Mindelheim (DE)
(72) Erfinder: SCHALLER, Veronika, 87600 Kaufbeuren (DE); SEIDEL, Korbinian, 87719 Mindelheim (DE); RAUSCHER, Ralf, 87748 Fellheim (DE); OTTER, Martin, 87700 Memmingen (DE); DREIER, Günter, 86489 Deisenhausen (DE)
(74) Vertreter: KASTEL Patentanwälte PartG mbB
(86) Internationale Anmeldenummer: PCT/EP2016/081253
(87) Internationale Veröffentlichungsnummer: WO 2017/102981

(56) Entgegenhaltungen:
- EP-A2- 1 178 587
- WO-A1-2015/158992
- JP-A- 2013 143 819
- KR-B1- 101 173 079
- US-A- 2 455 862
- US-A- 5 952 761

## Beschreibung

Die Erfindung betrifft ein Verfahren zum Einbringen von Isolierfolie und mindestens einem elektrischen Leiter in eine Nut eines Bauteils, beispielsweise eines Stators für eine elektrische Maschine. Die Erfindung betrifft des Weiteren eine zugehörige Vorrichtung.

Die KR 101 173 079 B1 betrifft ein Verfahren zum Herstellen eines Stators, bei dem eine gemeinsame Isolierfolie und elektrische Leiter in Nuten des Stators für eine elektrische Maschine eingebracht werden. Dabei wird die Isolierfolie in die Nuten eingebracht, so dass jeweilige Kanten der Nuten von der Isolierfolie überdeckt sind. Weiter werden eine Anzahl von elektrischen Leitern in jede Nut eingebracht, wobei mit einer Schnittlinie versehene Verbindungsbereiche der Isolierfolie zwischen den Nuten aufliegen und durch den Druck beim Einsetzen an der Schnittlinie getrennt werden, wobei die dann vereinzelten Isolierfolien weiter in die jeweilige Nut gelangen können.

Die JP 2013-143819 A offenbart ein Verfahren zum Herstellen eines Stators. Eine Isolierung an beiden Endbereichen eines Isolationspapiers wird sichergestellt, indem an einem inneren Bereich des Stators ein Überlappungszustand übereinander gefalteter Enden des Isolationspapiers beibehalten wird. Hierzu wird zunächst in jede Nut des Stators ein bereits mit überlappenden Endbereichen gefaltetes Isolationspapier von der offenen Nutseite radial eingebracht, anschließend werden Leiter axial eingeschoben. Anschließend wird ein keilförmig gefaltetes Papier zwischen die Nutöffnung und die überlappenden Enden des Isolationspapiers geschoben.

Aus der US 5 952 761 A ist ein durch einen Inverter getriebener Motor bekannt, der ein Isolationselement in einer Nut zum Isolieren einer Windung von einem Eisenkern aufweist. Das Isolationselement ist durch wenigstens zwei Isolierfolien gebildet, von denen wenigstens eine mit mehreren Bohrungen versehen ist. Das Isolationselement ist U-förmig mit umgebogenen Randbereichen ausgebildet.

Aus der US 2 455 862 A ist ein Rotor einer elektrischen Maschine mit einer Isolationsfolie in Form einer Endlosfolie bekannt, die in alle Nuten des Rotors eingesetzt ist.

Aus der WO2015/158992 A1 ist ein mit Windungen versehener Stator bekannt, der mit einem Joch und Zähnen ausgestattet ist, die an einer inneren Seite des Jochs vorstehen, so dass zwischen jeweils benachbarten Zähnen Nuten ausgebildet sind, in denen Leiter eingebracht sind. Der Stator umfasst weiter einzelne Nutisolatoren, die jeweils in den Nuten angeordnet sind, wobei zwei aufeinanderfolgende Nutisolatoren aneinander geschweißt sind.

Aus der EP 1 178 587 A2 sind ein Bauteil einer elektrischen Maschine und ein Herstellverfahren hierfür bekannt. Das Herstellerfahren umfasst die Schritte:
Bilden eines im Wesentlichen U-förmigen Isolators mit nach außen gebogenen Bereichen, die durch Biegen von Seitenabschnitten davon an Biegeteilen so gebildet werden, dass sie voneinander beabstandet sind,
Bilden von Windungsanordnungen,
Montieren des Isolators in jeder Nut so, dass die nach außen gebogenen Bereiche des Isolators aus einer Öffnung der Nut außen vorstehen und Einsetzen des Windungsanordnungen in jeden Isolator von einer offenen Seite der Nut aus unter Führung durch die nach außen gebogenen Bereiche und Einbringen der Windungsanordnungen zusammen mit dem Isolator in jede Nut.

Wie der voranstehende Stand der Technik zeigt, werden elektrische Leiter von elektrischen Maschinen, insbesondere Elektromotoren, typischerweise in Nuten eines Stators eingesetzt und gegenüber dem Stator mit einer Isolierfolie isoliert. Es hat sich jedoch gezeigt, dass beim Einsetzen von derartigen elektrischen Leitern in die Nuten häufig Beschädigungen auftreten.

Es ist deshalb eine Aufgabe der Erfindung, ein Verfahren sowie eine zugehörige Vorrichtung bereitzustellen, welche derartige Beschädigungen vermeiden.

Dies wird erfindungsgemäß durch ein Verfahren und eine Vorrichtung gemäß den jeweiligen Hauptansprüchen erreicht. Vorteilhafte Ausgestaltungen können beispielsweise den jeweiligen Unteransprüchen entnommen werden.

Die Erfindung schafft gemäß einem ersten Aspekt davon ein Verfahren zum Einbringen von Isolierfolie und mindestens eines elektrischen Leiters in zumindest eine Nut eines Bauteils, beispielsweise eines Stators für eine elektrische Maschine, welches die Abfolge folgender Schritte aufweist:
- Einbringen der Isolierfolie in die zumindest eine Nut, so dass jeweilige Kanten der Nut von der Isolierfolie überdeckt sind, und
- Einbringen einer Anzahl von elektrischen Leitern in die Nut,
wobei die jeweiligen Isolierfolien nach deren Einbringen zwischen Nuten festgehalten werden, um ein Einsetzen der elektrischen Leiter ohne Verrutschen oder Herausfallen der Isolierfolien zu erlauben, und wobei die Isolierfolien während des Einbringens der elektrischen Leiter losgelassen werden, so dass sie weiter in die jeweilige Nut gelangen können.

Bei der Erfindung ist vorgesehen, dass die Isolierfolie derart in die Nut eingebracht wird, dass jeweilige Kanten der Nut von der Isolierfolie überdeckt sind.

Durch die Überdeckung der Kanten wird eine Beschädigung der elektrischen Leiter beim Einbringen in die jeweilige Nut wirkungsvoll verhindert. Eine solche Ausgestaltung ist sowohl bei einer Variante, bei welcher die Isolierfolie als Einzelstücke ausgebildet sind, wie auch bei einer Variante, bei der die Isolierfolie als Endlospapier ausgebildet sind, realisierbar. Auch ein Endlospapier besitzt eine Anfangs- und Endkante, das Endlospapier besitzt eine sehr große Anzahl (daher "endlos", üblicherweise entsprechend der Anzahl der Nuten) von z.B. V-förmig oder U-förmig gebildeten oder gefalteten Spitzenbereichen, die üblicherweise als Abschnitte von einem Isolierfolienvorrat gewonnen wurden. Dieses planare Vormaterial erhält dann durch Faltung die Spitzenbereiche, und wird dann gebogen, um in den Innenraum des Stators zu gelangen. Bei Ausgestaltungen der Erfindung ist es möglich, U-förmig oder V-förmig gebildete oder gefaltete Spitzenbereiche in einer radialen und/oder axialen Bewegung in die Nuten des Stators/Bauteils einzuführen. Der Durchmesser der Biegung des Vormaterials orientiert sich an der geplanten Einführbewegung. Im eingebauten Zustand befinden sich Anfangs- und Endkante nebeneinander, anliegend, überlappend oder in Opposition, etwas beabstandet zueinander.

Bei einer elektrischen Maschine kann es sich insbesondere um einen Elektromotor handeln, beispielsweise einen leistungsstarken Elektromotor für ein Elektrofahrzeug.

Beim Schritt des Einbringens einer Isolierfolie wird die Isolierfolie gemäß einer Ausführung nur so weit in die Nut eingebracht, dass sie von einem Boden der Nut beabstandet ist. Dies ermöglicht insbesondere die Verwendung einzelner Isolierfolien, also typischerweise einer Isolierfolie pro Nut.

Beim Schritt des Einbringens einer Anzahl von elektrischen Leitern kann dann vorzugsweise die Isolierfolie durch die elektrischen Leiter bis zum Boden der jeweiligen Nut gedrückt werden. Damit können vorteilhaft Teile der Isolierfolie, welche aus der Nut herausstehen, in die Nut hineingezogen werden. Dies erspart einen weiteren Arbeitsgang zum Entfernen oder Verbringen der herausstehenden Teile. Es sei jedoch verstanden, dass die herausstehenden Teile auch separat entfernt oder in die Nut verbracht, beispielsweise gefaltet werden können.

Es sei verstanden, dass der Begriff "Isolierfolie" keine Beschränkung des Materials darstellt. Der Begriff "Isolierfolie" dient als Oberbegriff für alle für diesen Verwendungszweck für einen Fachmann bekannten Isoliermaterialien, seien sie zum Beispiel auf Papierbasis aufgebaut, oder auf einen Kunststoff, zum Beispiel ein Folienkunststoff.

Gemäß einer Ausführung wird in jede Nut eine separate Isolierfolie eingebracht. Die Isolierfolie kann dabei bevorzugt, bevor sie in die Nut eingebracht wird, vorgeformt, insbesondere vorgefaltet werden. Dies erlaubt eine einfache Verfahrensführung und verringert den apparativen Aufwand.

Geschickter Weise überlappen Isolierfolien, welche in benachbarte Nuten eingebracht wurden, zwischen diesen Nuten. Dies ermöglicht ein gemeinsames Greifen oder Halten zweier benachbarter Isolierfolien.

Die Isolierfolien werden erfindungsgemäß nach deren Einbringen zwischen jeweiligen Nuten festgehalten. Dies verhindert ein Verrutschen oder Herausfallen der Isolierfolie, insbesondere bis zum Einbringen der elektrischen Leiter.

Gemäß der Erfindung werden die Isolierfolien während des Einbringens der elektrischen Leiter losgelassen, so dass sie weiter in die jeweilige Nut gelangen können. Dies ermöglicht ein Verbringen der Isolierfolie in die jeweilige Endposition während der ohnehin erfolgenden Bewegung der elektrischen Leiter.

Gemäß einer Ausführung wird in eine Mehrzahl von Nuten eine gemeinsame Isolierfolie eingebracht.

Bevorzugt wird die Isolierfolie nach dem Schritt des Einbringens des elektrischen Leiters gefaltet, so dass sie sich vollständig innerhalb der jeweiligen Nut befindet. Damit wird ein Hervorstehen, welches beispielsweise zu unebenen Oberflächen oder Beschädigungen führen könnte, vermieden.

Es sei verstanden, dass die oben erwähnte Vorformung bzw. Vorfaltung der Isolierfolie sowohl beim Einbringen einzelner Isolierfolien wie auch bei der Verwendung einer gemeinsamen Isolierfolie verwendet werden kann. In erstem Fall kann beispielsweise eine Hutform verwendet werden. In zweitem Fall kann beispielsweise eine Mäanderform verwendet werden. Alternativ ist es jedoch beispielsweise auch möglich, eine nicht vorgeformte Isolierfolie zu verwenden und sie erst beim Einbringen in die Nut entsprechend zu formen.

Der Stator ist typischerweise rund. Die Isolierfolien und die elektrischen Leiter werden bevorzugt von innen radial nach außen eingebracht. Damit kann eine radialsymmetrische Ausführung erreicht werden, was eine einfache und gleichzeitige Verfahrensführung erlaubt.

Gemäß einer Weiterbildung weist das Verfahren ferner nach dem Schritt des Einbringens des elektrischen Leiters, insbesondere nach dem Falten der Isolierfolie in der Nut, folgenden Schritt auf:
- Einbringen eines jeweiligen Deckschiebers in die Nut, wobei der Deckschieber die in die Nut eingebrachten elektrischen Leiter abdeckt.

Der Deckschieber kann insbesondere die elektrischen Leiter, welche sich in der Nut befinden, gegen Verschmutzung oder Beschädigung sichern. Auch das Eindringen von Fremdkörpern kann verhindert werden.

Bevorzugt verschließt der jeweilige Deckschieber die Nut. Dies erlaubt einen vorteilhaften Abschluss.

Bei dem Verfahren ist gemäß einer Ausführung vorgesehen, dass die Deckschieber axial eingesetzt werden. Dies hat sich als vorteilhaft erwiesen, insbesondere da entsprechende Vorrichtungen neben dem Bauteil positioniert werden können. Jedoch können die Deckschieber alternativ auch radial eingesetzt werden.

Gemäß einer Ausgestaltung weist das Verfahren die Abfolge folgender Schritte auf:
- Bereitstellen mindestens einer Isolierfolie, die als Abschnitt von einem Isolierfolienvorrat gewonnen wurde und die im Querschnitt zumindest abschnittsweise, mindestens einen, von zwei Schenkel begrenzten, V-förmig gebildeten oder gefalteten Spitzenbereich aufweist, wobei die Isolierfolie in Richtung rechtwinklig zu dem V-förmigen Spitzenbereich eine Anfangs- und Endkante aufweist.
- Einbringen der Isolierfolie in das Bauteil derart, dass der V-förmig Spitzenbereich der Isolierfolie in die zumindest eine Nut hineinragt und die Schenkel an den Nutkanten anliegen, und
- Einbringen wenigstens eines elektrischen Leiters in die Nut.

Die V-förmige Ausgestaltung des Spitzenbereiches bewirkt, dass die einzelnen elektrischen Leiter, die danach in die Nut eingeführt werden, durch diese trichterartige Ausgestaltung des Spitzenbereiches geordnet und geführt in die Nut gelangen.

Die gemäß dieser Ausgestaltung der Erfindung vorgeschlagene, einen V-förmigen Spitzenbereich aufweisende, Isolierfolie zeichnet sich in seiner Spitzenbereich durch zwei Schenkel aus, die zusammen den Spitzenwinkel einschließen.

Die einen V-förmigen Spitzenbereich aufweisende Isolierfolie kleidet am Ende, wenn die elektrischen Leiter in die Nut eingelegt sind, die üblicherweise U-förmige Nut aus. Die Isolierfolie ist insofern flexibel, sich dieser Formumgestaltung anzupassen.

Die Nut wird definiert durch Nutbreite und Nuttiefe. Die Schenkel sind länger als die Nuttiefe, die Isolierfolie steht also aus der Nut hervor. Der Spitzenwinkel ist nun so gewählt, dass die Schenkel an der die Nut abschließenden Nutkanten oder Kanten anliegen, und der V-förmigen Spitzenbereich weitet sich außerhalb der Nut weiter auf, wodurch die Kanten geschützt/verdeckt sind.

Der Vorschlag gemäß der Ausgestaltung der Erfindung kombiniert somit eine verbesserte Methodik für das Einführen der elektrischen Leiter in die Nut, da diese geortet geführt werden, mit einer deutlichen Verbesserung des Schutzes der elektrischen Leiter, da diese nun nicht mehr an der scharfkantigen Nutkante anliegen und dort Schaden nehmen können.

Gemäß einer vorteilhaften Ausführung wird die Isolierfolie nach dem Einbringen versteift und Teile, welche außerhalb der Nuten liegen, werden durch spanende Bearbeitung entfernt.

Die Erfindung betrifft des Weiteren eine Vorrichtung zum Einbringen von elektrischen Leitern in Nuten eines Bauteils, beispielsweise eines Stators für einen Elektromotor. Die Vorrichtung weist eine Anzahl von Nutschiebern zum Einbringen von elektrischen Leitern in die Nuten und eine Anzahl von zwischen den Nutschiebern angeordneten Führungselementen zum seitlichen Führen der elektrischen Leiter während des Einbringens auf.

Erfindungsgemäß ist die Vorrichtung dazu ausgebildet ein erfindungsgemäßes Verfahren auszuführen. Dabei kann auf alle beschriebenen Ausführungen und Varianten zurückgegriffen werden.

Die erfindungsgemäße Vorrichtung erlaubt insbesondere die automatisierte Ausführung aller Schritte eines erfindungsgemäßen Verfahrens. Dabei können insbesondere die Nutschieber jeweils einer Nut zugeordnet werden. Die Nutschieber können jeweilige elektrische Leiter in eine jeweilige Nut verbringen. Die Führungselemente können die elektrischen Leiter dabei insbesondere quer zu ihrer Bewegungsrichtung stabilisieren.

Bevorzugt sind die Nutschieber radial bezüglich einer gemeinsamen Achse bewegbar. Dies erlaubt insbesondere die bereits erwähnte radiale Verfahrensführung.

In erfindungsgemäßer Ausbildung sind die Führungselemente radial oder parallel zu umgebenden Nutschiebern bewegbar, um Isolierfolien zwischen den Nuten zu halten bzw. freizugeben. Damit kann insbesondere die Verfahrensführung in der Alternative mit einzelnen Isolierfolien pro Nut vorteilhaft ausgeführt werden. Hierzu sei auf die obigen Ausführungen verwiesen.

Bei dem Verfahren und der Vorrichtung nach der Erfindung ist eine Isolierfolie mit einer Mehrzahl von jeweils parallel verlaufenden Falzlinien verwendbar, wobei sich zwischen zwei Falzlinien eine Ausstanzung erstreckt, die in einem Biegebereich angeordnet ist. Befinden sich zwischen zwei Ausstanzungen zwei (parallele) Falzlinien, dann bildet sich ein U-förmiger Spitzenbereich aus. Befindet sich zwischen zwei Ausstanzungen nur eine Falzlinie, dann bildet sich ein V-förmiger Spitzenbereich aus.

Vorteilhaft ist eine Isolierfolie verwendbar mit mindestens einem, im Querschnitt V-förmig gebildeten oder gefalteten Spitzenbereich und die als Abschnitt von einem Isolierfolienvorrat gewonnen wurde, wobei die Isolierfolie in Richtung rechtwinklig zu dem V-förmigen Spitzenbereich eine Anfangs- und Endkante aufweist.

Demnach kann eine, im Querschnitt zumindest abschnittsweise, mindestens eine V-förmig gebildeten oder gefalteten Spitzenbereich aufweisende Isolierfolie für das Isolieren der Nut eines Bauteiles, beispielsweise eines Stators einer elektrische Maschine, gegenüber dem mindestens einen elektrischen Leiter, der dafür vorgesehen ist, in die Nut eingelegt zu werden, verwendet werden.

Wie bereits beschrieben, ist vorteilhaft der Spitzenbereich von zwei Schenkeln gebildet, wobei vorgesehen ist, dass die Summe der beiden Schenkellängen mindestens der Nutbreite zuzüglich zweimal der Nuttiefe entspricht. Eine solche Ausgestaltung gewährleistet, dass zu Beginn des Einführens des elektrischen Leiter die Isolierfolie trichterartig über die Nutbreite aufgeweitet ist und die einzuführenden elektrischen Leiter führt und dann, wenn die Nut vollständig mit elektrischen Leiter gefüllt, die Isolierfolie mindestens noch an die Nutkante reicht.

Wird eine Anordnung gewählt, bei welchem die Summe der Schenkellängen gerade gleich ist der mittleren Nutbreite und der zweifachen Nuttiefe, dann gelingt es, einen Überstand der Isolierfolie über die Nut hinaus zu vermeiden.

Es ist dabei vorgesehen, dass die Falt- bzw. Knicklinien in dem V-förmigen Spitzenbereich in der als Endlospapier ausgeführten Isolierfolie parallel verlaufen.

Dies ermöglicht die weiter oben beschriebenen Vorteile.

Die Isolierfolie kann dabei vorteilhaft vorgeformt, insbesondere vorgefaltet sein. Beispielsweise kann sie für mehrere Nuten vorgesehen sein, wobei sie insbesondere mäanderartig gefaltet sein kann. Sie kann auch für eine Nut vorgesehen sein, wobei sie beispielsweise hutförmig gefaltet sein kann.

Mit dem Verfahren gemäß Ausgestaltungen der Erfindung lässt sich ein Stator, bevorzugt bestehend aus einem Blechpaket, der eine Vielzahl von Nuten zur Aufnahme von elektrischen Leitern aufweist, erreichen, wobei in den Nuten, zwischen den elektrischen Leitern und den die Nuten jeweils begrenzenden Nutwänden und Nutboden, zumindest abschnittsweise eine Isolierfolie mit einer Mehrzahl von jeweils parallel verlaufenden Falzlinien, wobei sich zwischen zwei Falzlinien eine Ausstanzung erstreckt, die in einem Biegebereich angeordnet ist, derart eingelegt ist, dass sich die Falzlinie am Nutenboden befindet und sich die Ausstanzung am, die jeweiligen Nuten trennenden Nutsteg, befindet. An die Ausstanzungen schließen sich Seitenbereiche an, die die Bereiche der Isolierfolie, die in benachbarte Nuten eingelegt sind, miteinander verbindet und stabilisiert.

Die Nuten sind von einander durch Nutstege getrennt. Die Nutwände sind pro Nut jeweils parallel, der Nutboden verbindet die Nutwände und schließen rechtwinklig an diese an. Die jeweiligen Mittelachsen der Nuten sind radial, zum Beispiel zur Rotationsachse, orientiert. Dieser in Ansicht möglichst rechteckige Nutraum wird bevorzugt mit als (im Querschnitt gesehen) Rechteckdraht ausgebildeten elektrischen Leitern ausgefüllt. Dies führt zu einer hohen Füllquote, was bei solchen Statoren, bzw. elektrischen Maschinen gewünscht ist. Die Rechteckdrähte werden dabei ein-, zwei-, drei- oder mehrreihig nebeneinander, möglichst über die ganze Nuttiefe (bis auf abschließende Deckschieber, usw.) in die Nut eingelegt. Das Einlegen der elektrischen Leiter erfolgt bevorzugt paketweise, d.h. in einer Einschubbewegung werden alle Leiter pro Nut, und bevorzugt gleichzeitig alle Nuten des Stators befüllt.

In diesem Zusammenhang wird insbesondere darauf hingewiesen, dass alle in Bezug auf die verschiedenen Vorrichtungen (auch Isolierfolie, Stator) beschriebenen Merkmale und Eigenschaften aber auch Verfahrensweisen sinngemäß auch bezüglich der Formulierung des Verfahrens gemäß Ausgestaltungen der Erfindung übertragbar sind. Gleiches gilt auch in umgekehrter Richtung, das bedeutet, nur in Bezug auf das Verfahren genannte, bauliche also vorrichtungsgemäße Merkmale können auch bei der Vorrichtung berücksichtigt werden.

In der Zeichnung sind Ausführungsbeispiele des erfindungsgemäßen Verfahrens sowie von zur Erläuterung angegebenen Verfahren schematisch dargestellt. Es zeigen:
- Fig. 1a: eine Anordnung von elektrischen Leitern,
- Fig. 1b: eine Statoranordnung,
- Fig. 2a bis 2d: Zustände in einem erfindungsgemäßen Verfahren gemäß einem Ausführungsbeispiel, und
- Fig. 3: einen Faltvorgang.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige Lösungen darstellen.

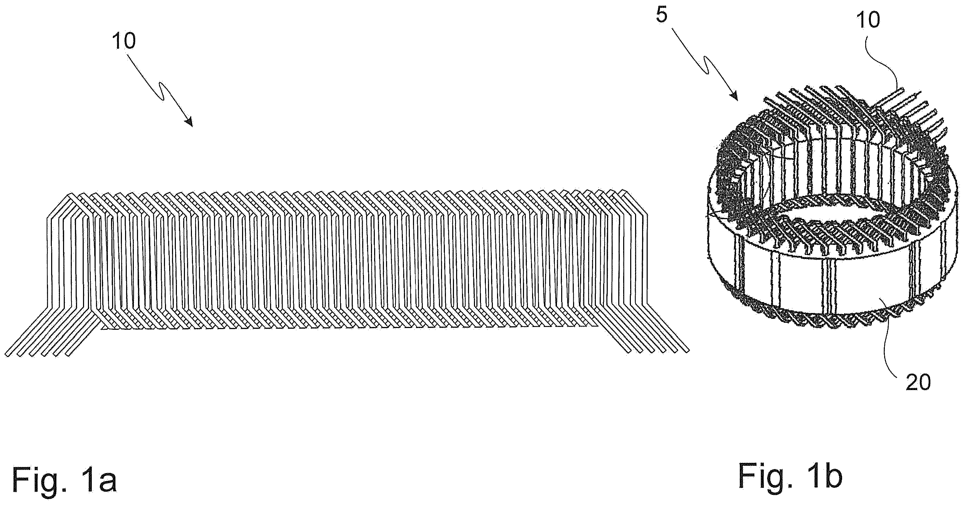

Figur 1a zeigt eine Anordnung von elektrischen Leitern 10, welche im Rahmen eines erfindungsgemäßen Verfahrens verwendet werden können. Es sei verstanden, dass diese Darstellung lediglich schematisch ist und auch deutlich abweichende Ausführungen von elektrischen Leitern 10 verwendet werden können.

Figur 1b zeigt eine Statoranordnung 5, welche beispielsweise mittels eines erfindungsgemäßen Verfahrens hergestellt werden kann. Die Statoranordnung 5 weist einen Stator 20 sowie eine daran bzw. darin angebrachte Anordnung von elektrischen Leitern 10 auf. Die elektrischen Leiter 10 sind insbesondere in Nuten des Stators 20 aufgenommen, wie nachfolgend detailliert beschrieben werden wird.

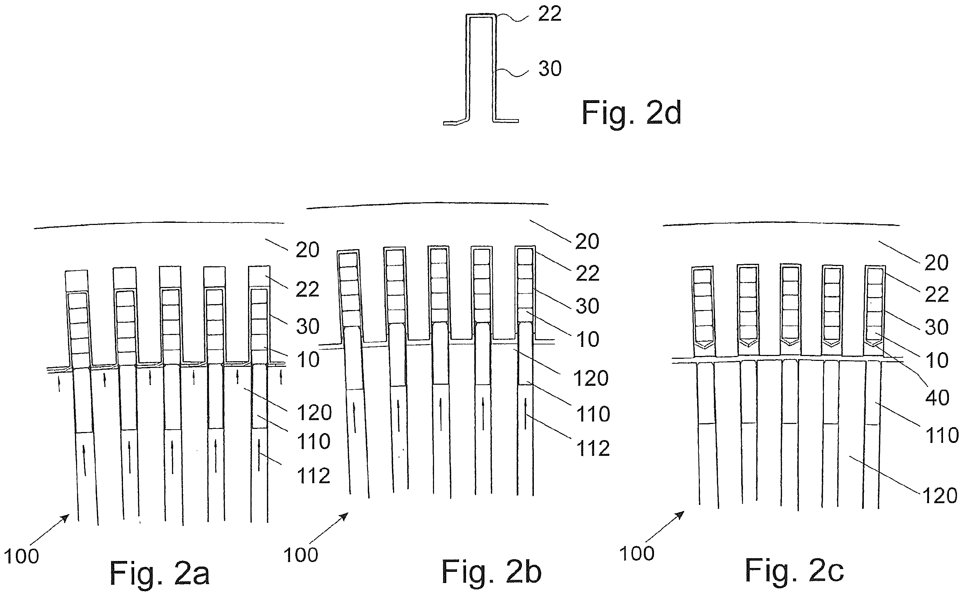

Die Figuren 2a bis 2d zeigen Zustände während eines erfindungsgemäßen Verfahrens gemäß einem Ausführungsbeispiel.

Dabei ist zu erkennen, dass in einem Stator 20 eine Anzahl von Nuten 22 ausgebildet sind. In diese Nuten 22 sollen Isolierfolien 30 und elektrische Leiter 10 eingebracht werden. Die in den Figuren 2a bis 2d dargestellte Variante des Verfahrens ist dabei derart, dass in jede Nut 22 eine separate Isolierfolie 30 eingebracht wird.

Zur Durchführung des erfindungsgemäßen Verfahrens ist eine Vorrichtung 100 zum Einbringen von elektrischen Leitern gemäß einem Ausführungsbeispiel der Erfindung vorgesehen. Die Vorrichtung 100 weist eine Anzahl von Nutschiebern 110 auf, welche jeweils entlang einer jeweiligen Bewegungsrichtung 112 beweglich sind. Dabei ist jeder Nutschieber 110 einer jeweiligen Nut 22 zugeordnet.

Zwischen den Nutschiebern 110 befinden sich jeweilige Führungselemente 120, welche die elektrischen Leiter 10 beim Einführen in die Nuten 22 gegen seitliches Verrutschen stabilisieren. Die Führungselemente 120 sind dazu ausgebildet, dass sie ebenfalls bewegt werden können.

Die Bewegungsrichtungen der Nutschieber 110 und der Führungselemente 120 sind bei der hier gezeigten Ausführung von einer nicht dargestellten zentralen Achse aus radial nach außen gerichtet. Dies ist in den Figuren 2a bis 2c insofern zu sehen, als eine leichte Krümmung des Stators 20 gezeigt ist und sich die gezeigten Bewegungsrichtungen, welche durch die Pfeile dargestellt sind, dieser Krümmung anpassen.

In jede der Nuten 22 wurde bereits ein jeweiliges Isolierpapier 30 oder Isolierfolie 30 eingebracht. Wie gezeigt ist das jeweilige Isolierpapier 30 dabei nur so weit in die jeweilige Nut 22 eingebracht worden, dass es vom Boden der Nut 22 noch deutlich beabstandet ist. Isolierpapiere 30 von jeweils benachbarten Nuten 22 überlappen sich wie gezeigt jeweils zwischen den Nuten 22.

In dem in Figur 2a dargestellten Zustand werden die jeweils überlappenden Teile der Isolierpapiere 30 von den Führungselementen 120 gehalten. Die Führungselemente 120 werden hierzu in Richtung auf den Stator 20 vorgespannt. Dies erlaubt ein Einsetzen der elektrischen Leiter 10 ohne die Gefahr, dass die Isolierfolien 30 verrutschen oder herausfallen.

In dem in Figur 2a dargestellten Zustand wurden die elektrischen Leiter 10 bereits so weit in die Nuten 22 eingebracht, dass sie sich vollständig innerhalb der jeweiligen Nut 22 befinden und den Raum, welcher durch die jeweiligen Isolierfolien 30 von der Öffnung aus abgegrenzt wird, ausfüllen. Dies erfolgte durch Betätigung der jeweiligen Nutschieber 110, um die elektrischen Leiter 10 radial nach außen zu schieben.

Von dem in Figur 2a dargestellten Zustand aus wurden die Nutschieber 110 weiter nach außen gefahren, wobei gleichzeitig die Führungselemente 120 leicht zurückgezogen wurden, um die Isolierfolien 30 freizugeben. Dadurch entsteht der in Figur 2b dargestellte Zustand.

Anschließend werden die Nutschieber 110 ebenfalls zurückgezogen, so dass sich diese außerhalb der Nuten 22 befinden. Dann werden in die jeweiligen Nuten 22 Deckschieber 40 eingebracht, welche die elektrischen Leiter 10 nach außen hin abdecken. Diese werden insbesondere in axialer Richtung eingebracht, können jedoch auch in radialer Richtung eingebracht werden.

Figur 2d zeigt separat einen Zustand einer Nut 22 mit eingebrachter Isolierfolie 30. Diese reicht bis zum Boden der Nut 22 und steht über die Kanten der Nut 22 hinaus.

Es sei darauf hingewiesen, dass bei dem erfindungsgemäßen Verfahren durch die Verwendung von Isolierfolien 30, welche die Kanten der jeweiligen Nut 22 abdecken, eine Beschädigung der elektrischen Leiter 10 beim Einführen in die Nuten 22 wirkungsvoll verhindert wird. Bei Ausführungen gemäß dem Stand der Technik waren diese Kanten typischerweise frei, so dass bei auch nur leichtem Verrutschen der elektrischen Leiter 10 eine Beschädigung resultieren konnte. Dies wird bei dem erfindungsgemäßen Verfahren durch die beschriebene Ausführung verhindert, was die Ausschussquote bei der Herstellung von Statoranordnungen erheblich verringert.

Es sei erwähnt, dass in den Figuren jeweils fünf nebeneinander liegende elektrische Leiter 10 dargestellt sind. Jedoch kann auch jede beliebige andere Anzahl verwendet werden, beispielsweise 1, 2, 3, 4, 6, 7, 8, 9, 10 oder auch mehr als 10 elektrische Leiter.

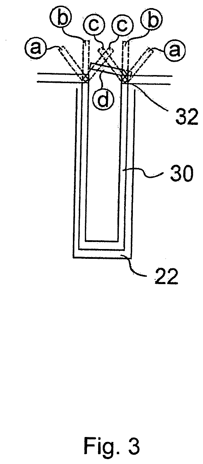

Figur 3 zeigt eine Nut 22 mit eingelegter Isolierfolie 30. Die Isolierfolie 30 ist an einem Falz 32 faltbar ausgebildet und steht zunächst noch über die Nut 22 hervor. Es sind des Weiteren in Figur 3 insgesamt vier Zustände gezeigt, welche jeweils durch eingekringelte Zahlen angegeben sind, wodurch dargestellt ist, wie die Isolierfolie 30 in die Nut 22 vollständig verbracht werden kann. Es ist zu erkennen, dass mit zunehmender Nummer bzw. Buchstaben des dargestellten Zustands die jeweils zunächst außen liegenden Teile der Isolierfolie 30 immer weiter nach innen geklappt werden, so dass sie sich schließlich komplett innerhalb der Nut 22 befinden.

Des Weiteren wurden noch jeweilige Deckschieber 40 in die Nuten 22 des Stators 20 eingebracht, um diese radial innenseitig abzuschließen.

Nachfolgend werden mögliche Merkmale des Vorschlages strukturiert wiedergegeben. Die nachfolgenden strukturiert wiedergegebenen Merkmale können beliebig untereinander kombiniert werden und können in beliebiger Kombination vorgesehen sein. Dem Fachmann ist klar, dass sich die Lösungen gemäß Ausführungen der Erfindung bereits aus dem Gegenstand mit den wenigsten Merkmalen ergibt. Insbesondere sind nachfolgend vorteilhafte oder mögliche Ausgestaltungen, nicht jedoch die einzig möglichen Ausgestaltungen wiedergegeben.

Es ist ein Verfahren zum Einbringen von Isolierfolie und mindestens einen elektrischen Leiter in zumindest eine Nut eines Bauteils, beispielsweise eines Stators für eine elektrische Maschine, beschrieben worden, welches die Abfolge folgender Schritte aufweist:
- Einbringen einer Isolierfolie in die zumindest eine Nut, so dass jeweilige Kanten der Nut von der Isolierfolie überdeckt sind, und
- Einbringen einer Anzahl von elektrischen Leitern in die Nut.

Bei einer Ausgestaltung des vorstehend genannten Verfahrens ist bevorzugt vorgesehen, dass beim Schritt des Einbringens einer Isolierfolie die Isolierfolie nur so weit in die Nut eingebracht wird, dass sie von einem Boden der Nut beabstandet ist.

Bei einer Ausgestaltung des vorstehend genannten Verfahrens ist vorgesehen, dass beim Schritt des Einbringens einer Anzahl von elektrischen Leitern die Isolierfolie durch die elektrischen Leiter bis zum Boden der jeweiligen Nut gedrückt wird.

Bei einer Ausgestaltung des vorstehend genannten Verfahrens ist vorgesehen, dass in jede Nut eine separate Isolierfolie eingebracht wird.

Bei einer Ausgestaltung des vorstehend genannten Verfahrens ist vorgesehen, dass die Isolierfolie, bevor sie in die Nut eingebracht wird, vorgeformt, insbesondere vorgefaltet wird.

Bei einer Ausgestaltung des vorstehend genannten Verfahrens ist vorgesehen, dass Isolierfolien, welche in benachbarte Nuten eingebracht wurden, zwischen diesen Nuten überlappen.

Bei dem erfindungsgemäßen Verfahren ist vorgesehen, dass die Isolierfolien nach deren Einbringen zwischen jeweiligen Nuten festgehalten werden.

Bei dem erfindungsgemäßen Verfahren ist vorgesehen, dass die Isolierfolien während des Einbringens der elektrischen Leiter losgelassen werden, so dass sie weiter in die jeweilige Nut gelangen können.

Bei einer Ausgestaltung des vorstehend genannten Verfahrens ist vorgesehen, dass beim Schritt des Einbringens einer Isolierfolie die Isolierfolie bis zum Boden der Nut eingebracht wird.

Bei einer Ausgestaltung des vorstehend genannten Verfahrens ist vorgesehen, dass in eine Mehrzahl von Nuten eine gemeinsame Isolierfolie eingebracht wird.

Bei einer Ausgestaltung des vorstehend genannten Verfahrens ist vorgesehen, dass die Isolierfolie als Endlospapier ausgebildet ist.

Bei einer Ausgestaltung des vorstehend genannten Verfahrens ist vorgesehen, dass die gemeinsame Isolierfolie nach deren Einbringen, bevorzugt auch nach dem Einbringen der elektrischen Leiter, zerschnitten wird.

Bei einer Ausgestaltung des vorstehend genannten Verfahrens ist vorgesehen, dass die Isolierfolie nach dem Schritt des Einbringens des elektrischen Leiters gefaltet wird, so dass sie sich vollständig innerhalb der jeweiligen Nut befindet.

Bei einer Ausgestaltung des vorstehend genannten Verfahrens ist vorgesehen, dass das Zerschneiden der gemeinsamen Isolierfolie und das Falten der Isolierfolien in einem Arbeitsgang, insbesondere mittels eines einzigen Werkzeugs, durchgeführt werden.

Bei einer Ausgestaltung des vorstehend genannten Verfahrens ist vorgesehen, dass der Stator rund ist und die Isolierfolien und die elektrischen Leiter von innen radial nach außen eingebracht werden.

Gemäß einer Weiterbildung weist das Verfahren ferner nach dem Schritt des Einbringens des elektrischen Leiters, insbesondere nach dem Falten der Isolierfolie in der Nut, folgenden Schritt auf:
- Einbringen eines jeweiligen Deckschiebers in die Nut, wobei der Deckschieber die in die Nut eingebrachten elektrischen Leiter abdeckt.

Bei einer Ausgestaltung des vorstehend genannten Verfahrens ist vorgesehen, dass der jeweilige Deckschieber die Nut verschließt.

Bei einer Ausgestaltung des vorstehend genannten Verfahrens ist vorgesehen, dass die Deckschieber axial eingesetzt werden.

Bei einer Ausgestaltung des vorstehend genannten Verfahrens ist vorgesehen, dass die Isolierfolie in Form einer geschlitzten Rosette eingebracht wird.

Bei einer Ausgestaltung des vorstehend genannten Verfahrens ist vorgesehen, dass die Isolierfolie nach dem Einbringen versteift wird und Teile, welche außerhalb der Nuten liegen, durch spanende Bearbeitung entfernt werden.

Es ist des Weiteren eine Vorrichtung zum Einbringen von elektrischen Leitern (10) in Nuten (22) eines Bauteils, beispielsweise eines Stators (20) für einen Elektromotor beschrieben worden, wobei die Vorrichtung (100) eine Anzahl von Nutschiebern (110) zum Einbringen von elektrischen Leitern (10) in die Nuten (22) und eine Anzahl von zwischen den Nutschiebern (110) angeordneten Führungselementen (120) zum seitlichen Führen der elektrischen Leiter (10) während des Einbringens aufweist. Erfindungsgemäß ist die Vorrichtung dazu ausgebildet, ein erfindugsgemäßes Verfahren auszuführen.

Bei einer Ausgestaltung der vorstehend genannten Vorrichtung ist vorgesehen, dass die Nutschieber (110) radial bezüglich einer gemeinsamen Achse bewegbar sind.

Bei der erfindungsgemäßen Vorrichtung ist vorgesehen, dass die Führungselemente (120) radial oder parallel zu umgebenden Nutschiebern (110) bewegbar sind, um Isolierfolien (30) zwischen den Nuten (22) zu halten bzw. freizugeben.

Des Weiteren ist eine Verwendung einer Isolierfolie zum Abdecken von Kanten einer in einem Bauteil, insbesondere einem Stator für eine elektrische Maschine, ausgebildeten Nut während des Einbringens von elektrischen Leitern in die Nut beschrieben worden.

Bei einer Ausgestaltung der vorstehend genannten Verwendung ist vorgesehen, dass die Isolierfolie vorgeformt, insbesondere vorgefaltet ist.

Bei einer Ausgestaltung der vorstehend genannten Verwendung ist vorgesehen, dass die Isolierfolie für mehrere Nuten vorgesehen ist, wobei sie insbesondere mäanderartig gefaltet ist.

Bei einer Ausgestaltung der vorstehend genannten Verwendung ist vorgesehen, dass die Isolierfolie für eine Nut vorgesehen ist, wobei sie insbesondere hutförmig gefaltet ist.

## Patentansprüche

1. Verfahren zum Einbringen von Isolierfolie (30) und mindestens eines elektrischen Leiters (10) in zumindest eine Nut (22) eines Bauteils, beispielsweise eines Stators (20) für eine elektrische Maschine, welches die Abfolge folgender Schritte aufweist:
- Einbringen der Isolierfolie (30) in die zumindest eine Nut (22), so dass jeweilige Kanten der Nut von der Isolierfolie überdeckt sind, und
- Einbringen einer Anzahl von elektrischen Leitern (10) in die Nut (22),
wobei die jeweiligen Isolierfolien (30) nach deren Einbringen zwischen Nuten (22) festgehalten werden, um ein Einsetzen der elektrischen Leiter (10) ohne Verrutschen oder Herausfallen der Isolierfolien (30) zu erlauben, und wobei die Isolierfolien (30) während des Einbringens der elektrischen Leiter (10) losgelassen werden, so dass sie weiter in die jeweilige Nut (22) gelangen können, **dadurch gekennzeichnet, dass** beim Schritt des Einbringens einer Anzahl von elektrischen Leitern (10) die elektrischen Leiter mittels einer Anzahl von Nutschiebern (110) in die Nuten (22) eingebracht werden und mittels einer Anzahl von zwischen der Nutschiebern angeordneten Führungselementen (120) geführt werden, die radial oder parallel zu umgebenden Nutschiebern (110) bewegbar ausgebildet sind, und dass die Isolierfolien (30) mittels der Führungselemente (120) zwischen den Nuten (22) gehalten bzw. freigegeben werden.

2. Verfahren nach Anspruch 1, **dadurch gekennzeichnet, dass** beim Schritt des Einbringens einer Isolierfolie die Isolierfolie (30) nur so weit in die Nut (22) eingebracht wird dass sie von einem Boden der Nut beabstandet ist.

3. Verfahren nach einem der vorhergehenden Ansprüche, **dadurch gekennzeichnet, dass** beim Schritt des Einbringens einer Anzahl von elektrischen Leitern die Isolierfolie (30) durch die elektrischen Leiter (10) bis zum Boden der jeweiligen Nut (22) gedrückt wird.

4. Verfahren nach einem der vorhergehenden Ansprüche, **dadurch gekennzeichnet, dass** in jede Nut (22) eine separate Isolierfolie (30) eingebracht wird

5. Verfahren nach Anspruch 4, **dadurch gekennzeichnet, dass** Isolierfolien (30), welche in benachbarte Nuten (22) eingebracht wurden, zwischen diesen Nuten überlappen.

6. Verfahren nach einem der vorhergehenden Ansprüche, **dadurch gekennzeichnet, dass** in eine Mehrzahl von Nuten (22) eine gemeinsame Isolierfolie (30) eingebracht wird.

7. Verfahren nach einem der vorhergehenden Ansprüche, **dadurch gekennzeichnet, dass** die Isolierfolie (30) nach dem Schritt des Einbringens der elektrischen Leiter (10) gefaltet wird, so dass sie sich vollständig innerhalb der jeweiligen Nut (22) befindet.

8. Verfahren nach einem der vorhergehenden Ansprüche, **dadurch gekennzeichnet, dass** das Verfahren ferner nach dem Schritt des Einbringens der elektrischen Leiter (10), insbesondere nach dem Falten der Isolierfolie (30) in der Nut (22), folgenden Schritt aufweist:
- Einbringen eines jeweiligen Deckschiebers (40) in die Nut (22), wobei der Deckschiebe (40) die in die Nut (22) eingebrachten elektrischen Leiter (10) abdeckt

9. Vorrichtung zum Ausführen eines Verfahrens nach einem der voranstehenden Ansprüche, zum Einbringen von elektrischen Leitern (10) in Nuten (22) eines Bauteils, beispielsweise eines Stators (20) für einen Elektromotor, wobei die Vorrichtung (100) umfasst:
eine Einrichtung zum Einbringen von Isolierfolien (30) in die jeweilige Nut (22), so dass jeweilige Kanten der Nut (20) von der Isolierfolie (30) überdeckt sind, und
eine Einrichtung zum Einbringen einer Anzahl von elektrischen Leitern (10) in die jeweilige Nut (22), die eine Anzahl von Nutschiebern (110) zum Einbringen von elektrischen Leitern (10) in die Nuten (22) und eine Anzahl von zwischen den Nutschiebern (110) angeordneten Führungselementen (120) zum seitlichen Führen der elektrischen Leiter (10) während des Einbringens aufweist, wobei die Führungselemente (120) dazu ausgebildet sind, dass sie radial oder parallel zu umgebenden Nutschiebern bewegt werden können, und wobei die Vorrichtung (100) dazu ausgebildet ist, die Isolierfolien mittels der Führungselemente (120) beim Einsetzen der elektrischen Leiter (10) festzuhalten und anschließend die Nutschieber (110) weiter auszufahren und gleichzeitig die Führungselemente (120) zurückzuziehen, um die Isolierfolien (30) freizugeben.

## Claims

1. Method for introducing insulating film (30) and at least one electrical conductor (10) into at least one groove (22) of a component, for example a stator (20) for an electrical machine, which method comprises the sequence of the following steps:
- introducing the insulating film (30) into the at least one groove (22) so that respective edges of the groove are covered by the insulating film, and
- introducing a number of electrical conductors (10) into the groove (22), the respective insulating films (30) being held between grooves (22) after their introduction in order to allow introduction of the electrical conductors (10) without the insulating films (30) slipping or falling out, and the insulating films being released during the introduction of the electrical conductors (10) so that they can continue to enter the respective groove (22), **characterized in that**, during the step of introducing a number of electrical conductors (10), the electrical conductors are introduced into the grooves by means of a number of cover slides (110) and are guided by means of a number of guide elements (120) which are arranged between the cover slides and are designed to be movable radially or parallel to surrounding cover slides (110), and **in that** the insulating films (30) are held or released between the grooves (22) by means of the guide elements (120).

2. Method according to claim 1, **characterized in that,** during the step of introducing an insulating film, the insulating film (30) is introduced into the groove (22) only to such an extent that it is spaced from a bottom of the groove.

3. Method according to any one of the preceding claims, **characterized in that,** during the step of introducing a number of electrical conductors the insulating film (30) is pressed through the electrical conductors (10) to the bottom of the respective groove (22).

4. Method according to any one of the preceding claims, **characterized in that** a separate insulating film (30) is introduced into each groove (22).

5. Method according to claim 4, **characterized in that** insulating films (30) which have been introduced into adjacent grooves (22) overlap between these grooves.

6. Method according to any one of the preceding claims, **characterized in that** a common insulating film (30) is introduced into a plurality of grooves (22).

7. Method according to any one of the preceding claims, **characterized in that** the insulating film (30) is folded after the step of introducing the electrical conductors (10), so that it is located completely within the respective groove (22).

8. Method according to one any of the preceding claims, **characterized in that** the method further comprises the following step after the step of introducing the electrical conductors (10), in particular after folding the insulating film (30) in the groove (22):
- introducing a respective slot liner (40) into the groove (22), wherein the slot liner (40) covers the electrical conductors (10) inserted into the groove (22).

9. Device for carrying out a method according to any one of the preceding claims, for introducing electrical conductors (10) into grooves (22) of a component, for example a stator (20) for an electric motor, wherein the device (100) comprises: a device for introducing insulating films (30) into the respective groove (22), so that respective edges of the groove (20) are covered by the insulating film (30), and a device for introducing a number of electrical conductors (10) into the respective groove (22), which device has a number of cover slides (110) for introducing electrical conductors (10) into the grooves (22) and a number of guide elements (120) arranged between the cover slides (110) for laterally guiding the electrical conductors (10) during introduction, wherein the guide elements (120) are designed so that they can be moved radially or parallel to surrounding cover slides, and wherein the device (100) is designed to hold the insulating films by means of the guide elements (120) during introduction of the electrical conductors (10) and then to extend the cover slides (110) further and simultaneously retract the guide elements (120) in order to release the insulating films (30).

## Revendications

1. Procédé d'insertion d'un film isolant (30) et d'au moins un conducteur électrique (10) dans au moins une encoche (22) d'un composant, par exemple un stator (20) pour une machine électrique, le procédé comprenant la séquence d'étapes suivante:
- l'insertion du film isolant (30) dans ladite au moins une encoche (22) de sorte que les bords respectifs de l'encoche soient recouverts par la feuille isolante et
- l'insertion d'un certain nombre de conducteurs électriques (10) dans l'encoche (22), les films isolants respectifs (30) étant maintenus après leur insertion entre des encoches (22) pour permettre l'insertion des conducteurs électriques (10) sans que les films isolants (30) ne glissent ou ne tombent, et les films isolants étant relâchés pendant l'insertion des conducteurs électriques (10) de manière à ce qu'ils puissent continuer à passer dans l'encoche respective (22), **caractérisé en ce que** lors de l'étape d'insertion d'un certain nombre de conducteurs électriques (10) les conducteurs électriques sont introduits dans les encoches au moyen d'un certain nombre de glissières de couverture (110) et sont guidés au moyen d'un certain nombre d'éléments de guidage (120) disposés entre les glissières de couverture, qui sont conçus de manière à pouvoir se déplacer radialement ou parallèlement aux glissières de couverture (110) environnantes, et **en ce que** les films isolants (30) sont maintenus ou libérés au moyen des éléments de guidage (120) entre les encoches (22).

2. Procédé selon la revendication 1, **caractérisé en ce que,** lors de l'étape d'insertion d'un film isolant, le film isolant (30) est inséré dans l'encoche (22) seulement jusqu'à ce qu'il soit espacé d'un fond de l'encoche.

3. Procédé selon l'une quelconque des revendications précédentes, **caractérisé en ce que,** lors de l'étape d'insertion d'un certain nombre de conducteurs électriques, le film isolant (30) est poussé par les conducteurs électriques (10) jusqu'au fond de l'encoche respective (22).

4. Procédé selon l'une quelconque des revendications précédentes, **caractérisé en ce qu'**un **f**ilm isolant (30) distinct est introduit dans chaque encoche (22).

5. Procédé selon la revendication 4, **caractérisé en ce que** les films isolants (30) qui ont été introduits dans des encoches (22) voisines se chevauchent entre ces encoches.

6. Procédé selon l'une quelconque des revendications précédentes, **caractérisé en ce qu'**un film isolant commun (30) est introduit dans une pluralité d'encoches (22).

7. Procédé selon l'une quelconque des revendications précédentes, **caractérisé en ce que,** après l'étape d'insertion des conducteurs électriques (10), le film isolant (30) est plié de manière à se trouver entièrement à l'intérieur de chaque encoche (22).

8. Procédé selon l'une quelconque des revendications précédentes, **caractérisé en ce que** le procédé comprend en outre l'étape suivante après l'étape d'insertion des conducteurs électriques (10), notamment après le pliage du film isolant (30) dans l'encoche (22):
- l'insertion d'une fermeture d'encoche respective (40) dans l'encoche (22), la fermeture d'encoche (40) recouvrant les conducteurs électriques (10) mis en place dans l'encoche (22).

9. Dispositif pour la mise en oeuvre d'un procédé selon l'une des revendications précédentes, pour l'insertion de conducteurs électriques (10) dans des encoches (22) d'un composant, par exemple un stator (20) pour un moteur électrique, le dispositif (100) comprenant:
un dispositif pour insérer des feuilles isolantes (30) dans l'encoche respective (22), de sorte que des bords respectifs de l'encoche (20) sont recouverts par la feuille isolante (30), et un dispositif pour insérer un certain nombre de conducteurs électriques (10) dans l'encoche respective (22), qui présente un certain nombre de glissières de couverture (110) pour introduire des conducteurs électriques (10) dans les encoches (22) et un certain nombre d'éléments de guidage (120) disposés entre les glissières de couverture (110) pour guider latéralement les conducteurs électriques (10) pendant l'insertion, dans lequel les éléments de guidage (120) sont conçus pour être déplacés radialement ou parallèlement aux glissières de couverture environnantes, et dans lequel le dispositif (100) est conçu pour maintenir les feuilles isolantes au moyen des éléments de guidage (120) lors de l'insertion des conducteurs électriques (10) et pour continuer ensuite à déployer les glissières de couverture (110) tout en retirant les éléments de guidage (120) afin de libérer les feuilles isolantes (30).
